# EUROPEAN PATENT SPECIFICATION

(11) **EP 0 335 919 B1**
(45) Date of publication and mention of the grant of the patent: **21.09.1994**
(21) Application number: 88906604.9
(22) Date of filing: 19.05.1988
(51) Int. Cl.: H01L 23/58

(54) **SYSTEM AND METHOD FOR SECURING INTEGRATED CIRCUITS FROM UNAUTHORIZED COPYING**
VORRICHTUNG UND VERFAHREN ZUR SICHERUNG VON INTEGRIERTEN SCHALTKREISEN VOR UNERLAUBTEM KOPIEREN
SYSTEME ET PROCEDE SERVANT A PROTEGER DES CIRCUITS INTEGRES CONTRE LES COPIES NON AUTORISEES

(30) Priority: 24.09.1987 US 101529
(43) Date of publication of application: 11.10.1989
(60) Divisional application: 91120505.2
(73) Proprietor: Hughes Aircraft Company, Los Angeles, California 90045-0066 (US)
(72) Inventor: OZDEMIR, Faik, S., Thousand Oaks, CA 91360 (US); SELIGER, Robert, L., Agoura, CA 91301 (US); ROSENBERG, Gerald, B., San Mateo, CA 94402 (US)
(74) Representative: KUHNEN, WACKER & PARTNER
(86) International application number: PCT/US88/01726
(87) International publication number: WO 89/03124

(56) References cited:
- FR-A- 2 471 051
- FR-A- 2 486 717
- US-A- 4 139 864
- US-A- 4 267 578
- US-A- 4 583 011
- US-A- 4 603 381
- Patent Abstracts of Japan, vol. 10, no. 8(E-373)(2065), 14 January 1986, & JP,A, 60170954
- IBM Technical Disclosure Bulletin, vol. 23, no. 4, September 1980, (New York, US), J.P. Coullahan et al.: "Part number and test verification scheme", pages 1421-1422

## Description

The present invention relates to a system and a method for securing integrated circuits from unauthorized copying according to the preamble of claim 1 and 3, respectively.

A system of that type is known from **US-A-4 583 011**. This document discloses a system with at least one integrated circuit which is designed to perform a desired circuit function and which includes circuit elements to perform this circuit function. Moreover, there is provided an additional circuit element within this integrated circuit in the form of a "pseudo MOS device" which device is connected with the remainder of the integrated circuit; this MOS device, however, does not contribute to the circuit function though it has the visible appearance of being functionally interconnected with the remainder part.

In order to prevent an unauthorized copying of the integrated circuit, the MOS device includes a physical modification which is reached by modifying the implementaion mode of the MOS structure and, thus, is not readily visibly apparent to a copyist. This modification causes, however, the additional MOS device to function in a different manner due to a certain signal which has an incorrect logic value without the a.m. correct implementaion mode.

A further control system of that kind is known from **FR-A-2 486 717**. In this control system, the doping concentration of selected transistors of an integrated circuit is selectively modified so as to provide a copying protection. This is because it is very difficult for a copyist to find out which one of these transistors comprises a modified doping concentration; however, without implementing the correct doping concentration the system does not function correctly any longer.

A still further control system of that kind is known from **FR-A-2 471 051**. In this control system, additional metallization lands are provided which are arranged in the same level as metal interconnections to the respective integrated circuits but which are isolated from these interconnections. These additional isolated metallization lands, therefore, do not allow to reveal the underlying device structure so that a copyist can hardly be successful.

A drawback of these known systems, however, has to be seen in that the necessary modification of the additional circuit element is established by means of an altered doping type and/or concentration or by additional isolated metallization lands. However, a modification of that type requires a rather complicated step in the process of fabricating the integrated circuit; the overall production costs of the integrated circuit, therefore, are clearly increased by the provision of the a.m. additional copy protection element.

It is therefore the object of the present invention to improve a system and a method according to the preamble of claims 1 and 3, respectively, in such a way that the production costs of the system are not increased by the additional provision of a copy protection element.

According to the present invention this object is solved by the advantageous measures indicated in the characterizing parts of claims 1 and 3, respectively.

Hence, according to the present invention, it is proposed that the additional copy protection circuit element be provided with an apparent metallized circuit connection which comprises separate metallized sections spaced from each other by a very narrow, non-conductive gap which is forming an open circuit between these sections but which is not wide enough to be readily visible perceptible. Because of this open circuit, the circuit element functions in a different manner as compared to an element with an uninterrupted metallization. It is however very difficult to detect such a gap so that there is provided a very effective copy protection; on the other hand, a gap of such kind can be fabricated very easily which is why the overall fabrication costs of the integrated circuit are not remarkably increased.

Other advantageous embodiments of the present invention are indicated in the subclaims.

The present invention will be described in more detail in the following with reference to the drawings, in which:
Fig.1 is a block diagramm of an integrated circuit fabrication process for performing the present invention;
Fig.2 is a sectional view of the copy protection circuit element according to the present invention; and
Fig.3 is a plan view of an integrated circuit showng possible placements of the copy protection circuit element in a circuit having thousands of logic gates.

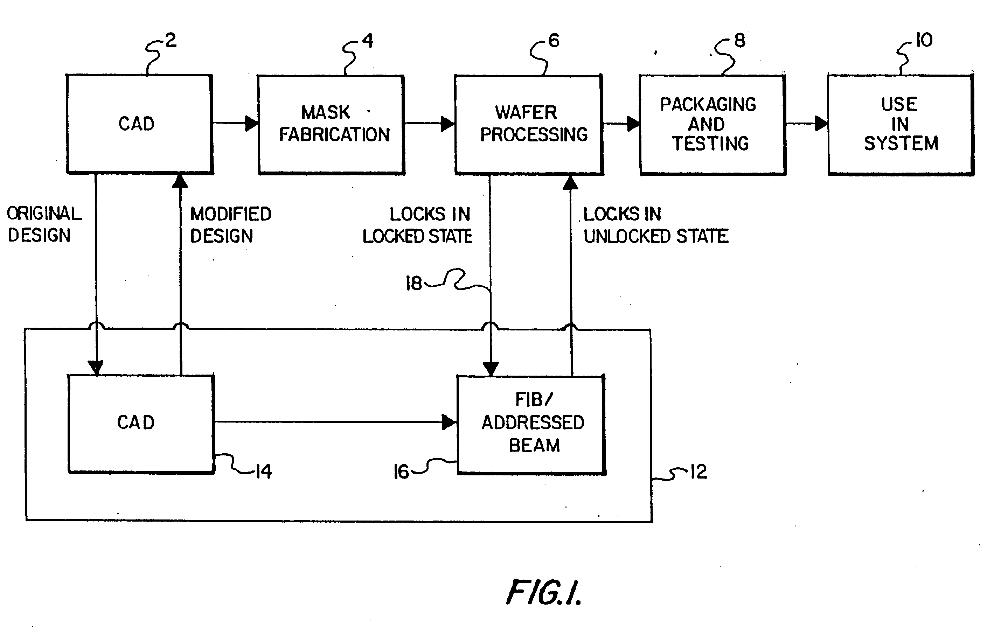

Fig.1 illustrates the fabrication sequence of an integrated circuit (abbreviated with IC in the following) which is to be secured against unauthorized copying. A first computer aided design (CAD) system 2 is used to design the IC in a conventional manner to perform its intended function. The conventional fabrication sequence is illustrated at the top of the figure, consisting of a mask fabrication step 4 which uses the IC design layout data produced by CAD 2, a wafer processing step 6 using the masks, a packaging and testing step 8 of the resulting ICs, and finally a step 10 of actual field use of the ICs in overall systems. In accordance with the invention, this fabrication sequence is modified by the control elements in block 12 to secure the IC against unauthorized copying. The original design from CAD 2 is delivered to another CAD system 14, which modifies the IC design by providing for additional circuit elements that are used solely for copy protection. These circuit elements do not interfere with the normal operation of the IC, but are provided to frustrate attempted copying. The modified circuit design is sent back to the first CAD 2, which then incorporates the additional copy protection circuit elements into the mask fabrication.

The second CAD system 14 also programs a focused ion beam (FIB) 16 which is used to activate the copy protection system. A FIB is a system that produces an ion beam and focuses it down to a very small spot. Current FIB systems can achieve spot sizes considerably less than one µm, or smaller than the smallest surface features generally found in ICs. One suitable FIB system is described in an article by V. Wang, J. W. Ward and R. L. Seliger, "A Mass Separating Focused-Ion-Beam System for Maskless Ion Implantation", J. Vac. Sci. Technol., 19(4), Nov./Dec. 1981, pages 1158-1162.

The additional circuit elements which are added for copy protection may be considered to function as "locks" in the sense that the circuit cannot successfully be copied unless the additional elements are copied in their "unlocked" state. The IC fabrication process depicted in FIG. 1 produces circuits with their "locks" in their "unlocked" state. The sequence of fabrication steps is as follows: the masks which have been modified in the manner described above are used to perform the initial segment of fabrication on the wafers. The wafers are then delivered to the FIB system in which the necessary FIB processing is carried out to convert the "locks" from their "locked" state to their "unlocked" state. Then the wafers are returned to normal processing where the remaining steps in the fabrication sequence are carried out resulting in completely processed wafers. The wafers are then packaged and tested in the conventional manner. The FIB processing conducted on the wafer involves directing the FIB to at least some of the circuit elements to alter their electrical characteristics. However, the extremely small size of the FIB spot is utilized to provide an electrical alteration that is not readily visibly apparent. Thus, if the IC is photographed by a copyist, the altered additional circuit elements will retain the visible appearance of their unaltered state, and the copyist will reproduce the IC with all of the additional circuit elements in their unaltered states. Thus, while the IC copy will have the same visible appearance as the original IC, it will not function the same electrically. In particular, the IC copied in accordance with the visible appearance original IC will not function correctly, thus being useless to the copyist. This alteration may be considered to place the "locks" in an "unlocked" state. After fabrication, the copy-secured IC is packaged and tested in the normal fashion, and then distributed for use in field systems. The above described method produces "locks" that are "unlocked" once during the fabrication process. Since these "locks" are never again returned to their "locked" state, these "locks" are referred to as "static locks".

While the small spot size is important, there is one other characteristic that is even more important. Namely, the fact that the FIB is an addressable beam makes possible the desired customization. Other beams are also addressable; for example, an electron beam.

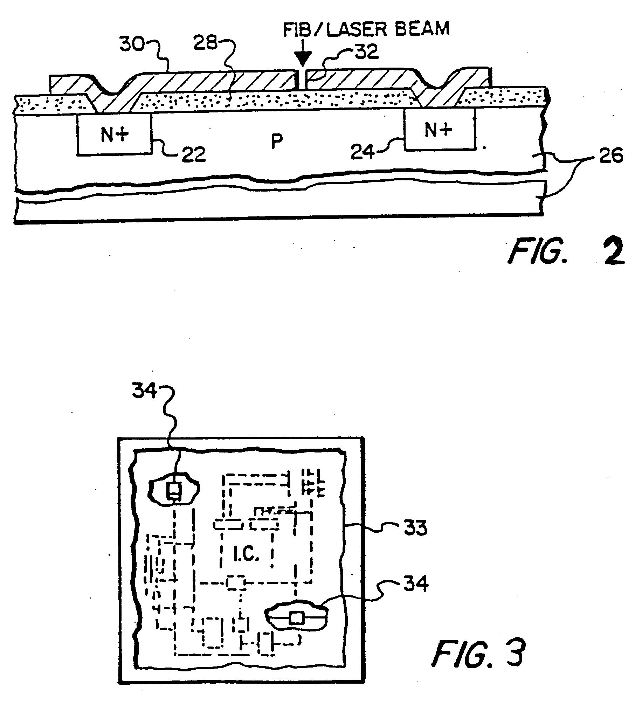

The way of implementing the copy protection security system, is shown in FIG. 2. A circuit device is fabricated which, for illustrative purposes, consists of a pair of n⁺ doped regions 22, 24 set in a p-type substrate 26, with an oxide layer 28 overlying the substrate. A metallization layer 30 is formed over the oxide layer 28, and contacts the n⁺ regions 22, 24 through windows in the oxide layer. When initially formed, the metallization layer 30 completes a short circuit connection between the two n⁺ regions. In accordance with the invention, a very narrow cut 32 is made in the metallization layer between the two n⁺ regions. The cut is wide enough to electrically separate the two n⁺ regions, but narrow enough so that it is not readily visibly apparent to a copyist. Thus, if an attempt is made to copy the circuit by the usual photographic technique, the open circuit between doped regions 22 and 24 will appear as a continuous metallized connection, and the copyist will implement his own circuit with such a connection. The apparent connection provided by metallization 30 is designed into the overall circuit so that the circuit will function properly if the two sections left by the cut are electrically separated from each other, but will not function properly if a continuous electrical connection is actually made. Thus, a copyist will be deceived into providing an actual connection, and as a consequence his circuit will not function properly.

The narrow cut is preferably made with a FIB, which can cut with a spot size on the order of tenths of microns. While a FIB is preferred, it might also be possible to employ a focused electron beam or focused laser beam device for this purpose. In general, any serial writing beam machine in which the dimension of the beam is no greater than the smallest feature size of the element to be cut may be employed.

Depending upon the operating voltage levels, it may be difficult to obtain cuts which are so small that they cannot readily be seen, and yet still maintain electrical isolation between the metallization sections. However, many ICs are quite complicated, employing perhaps 50,000 gates or more. With such circuits the presence of apparent circuit elements such as the sectioned metallization connection of FIG. 2 can still be effectively hidden from a copyist by locating such apparent elements at several random locations in the circuit. This situation is illustrated in FIG. 3, in which a complicated IC 33 having - thousands of logic gates includes a number of apparent circuit elements 34 at different locations in the overall circuit (the relative size of apparent elements 34 is exaggerated). Even if the cuts are wide enough to be visible under reasonably close inspection of the individual apparent circuit elements, it is highly unlikely that their presence would be detected because they are hidden among the very large number of real circuit elements.

Most integrated circuits have two or more levels of metallization. It would be relatively simple to have a cut at the first level metallization, and then to cover up the cut with a metallization structure in the second level of metallization. If the circuit is complex enough and the cut narrow enough, this "cover up" will render the cut unobservable.

## Claims

1. A system for securing integrated circuits from unauthorized copying, comprising:
**[a]** at least one integrated circuit (33) which is designed to perform a desired circuit function and which includes circuit elements to perform said circuit function;
**[b]** at least one additional circuit element (34) within said integrated circuit (33) which
**[b1]** is connected with the remainder of said integrated circuit (33) but does not contribute to said circuit function and which
**[b2]** has the visible appearance of being functionally interconnected with the remainder of said integrated circuit (33) but includes a physical modification not readily visibly apparent to a copyist, which modification causes said additional circuit element (34) to function in a different manner;
**characterized in that**
**[b3]** said at least one additional circuit element (34) comprises an apparent metallized circuit connection (30) which comprises separate metallized sections spaced from each other by a very narrow, non-conductive gap (32) which is wide enough to form an open circuit between said sections but not wide enough to be readily visibly perceptible.

2. A system according to claim 1, **characterized in that** said very narrow gap (32) is formed in a first level of metallization and is covered by a second level of metallization.

3. A method for securing integrated circuits from unauthorized copying, wherein the respective integrated circuit (33) is designed to perform a desired circuit function and includes circuit elements to perform said circuit function, said method comprising the steps of
providing at least one additional circuit element (34) within said integrated circuit (33),
connecting said additional circuit element (34) with the remainder of said integrated circuit (33) although it does not contribute to said circuit function,
giving said additional circuit element (34) the visible appearance of being functionally interconnected with the remainder of said integrated circuit (33), and
providing in said additional circuit element (34) a physical modification not readily visibly apparent to a copyist, which modification causes said additional circuit element (34) to function in a different manner;
**characterized by the steps of**
forming said at least one additional circuit element (34) with an apparent metallized circuit connection (30) and dividing said apparent metallized circuit connection (30) into separate metallized sections by forming a very narrow, non-conductive gap (32) which is wide enough to form an open circuit between said sections but not wide enough to be readily visibly perceptible.

4. A method according to claim 3, **characterized by the step of** cutting said very narrow gap (32) with a serial writing beam apparatus (16), the beam dimension of which is selected at least as small as the smallest feature size of the circuit element to be cut.

5. A method according to claim 4, **characterized in that** said serial writing beam apparatus (16) is outputting a focused ion beam.

6. A method according to claim 4, **characterized in that** said serial writing beam apparatus (16) is outputting a laser beam.

7. A method according to one of claims 3 to 6, **characterized by the steps** of forming said very narrow gap (32) in a first level of metallization and of covering said very narrow gap (32) by a second level of metallization.

## Patentansprüche

1. Ein System zum Schützen von integrierten Schaltungen vor unberechtigtem Kopieren mit:
**[a]** mindestens einer integrierten Schaltung (33), welche entworfen ist, eine gewünschte Schaltungsfunktion durchzuführen, und welche Schaltungselemente enthält, die Schaltungsfunktion durchzuführen;
**[b]** mindestens einem zusätzlichen Schaltungselement (34) innerhalb der integrierten Schaltung (33), welche
**[b1]** an den Rest der integrierten Schaltung (33) angeschlossen ist, jedoch nicht zu der Schaltungsfunktion beiträgt, und welche
**[b2]** die sichtbare Erscheinungsform einer funktionalen Verbindung mit dem Rest der integrierten Schaltung (33) besitzt, jedoch eine einem Kopierenden nicht sofort ersichtliche physikalische Modifikation enthält, die das zusätzliche Schaltungselement (34) dazu veranlaßt, auf eine andere Art zu arbeiten;
**dadurch gekennzeichnet, daß**
**[b3]** mindestens ein zusätzliches Schaltungselement (34) eine offensichtlich metallisierte Schaltungsverbindung (30) aufweist, welche abgetrennte metallisierte Abschnitte aufweist, die voneinander um einen sehr engen, nicht leitenden Spalt (32) getrennt sind, welcher groß genug ist, eine offene Schaltung zwischen den Abschnitten zu bilden, jedoch nicht groß genug ist, um bereits merklich sichtbar zu sein.

2. Ein System nach Anspruch 1, **dadurch gekennzeichnet, daß** der sehr enge Spalt (32) in einer ersten Stufe einer Metallisierung gebildet wird und in einer zweiten Stufe einer Metallisierung bedeckt wird.

3. Ein Verfahren zum Schützen von integrierten Schaltungen vor unberechtigtem Kopieren, bei welchem die jeweilige integrierte Schaltung (33) entworfen ist, eine gewünschte Schaltungsfunktion durchzuführen, und welche Schaltungselemente enthält, die Schaltungsfunktion durchzuführen, wobei das Verfahren die Schritte aufweist
Vorsehen von mindestens einem zusätzlichen Schaltungselement (34) innerhalb der integrierten Schaltung (33),
Verbinden des zusätzlichen Schaltungselements (34) mit dem Rest der integrierten Schaltung (33), obwohl es nicht zu der Schaltungsfunktion beiträgt,
dem zusätzlichen Schaltungselement (34) die sichtbare Erscheinungsform einer funktionalen Verbindung mit dem Rest der integrierten Schaltung (33) geben, und
Bereitstellen einer physikalischen Modifikation in dem zusätzlichen Schaltungselement (34), welche einem Kopierenden nicht sofort sichtbar offensichtlich ist, wobei die Modifikation das zusätzliche Schaltungselement (34) dazu veranlaßt, auf eine unterschiedliche Weise zu funktionieren,
**gekennzeichnet durch die Schritte des**
Bildens mindestens eines zusätzlichen Schaltungselements (34) mit einer offensichtlich metallisierten Schaltungsverbindung (30) und
Teilen der offensichtlich metallisierten Schaltungsverbindung (30) in getrennte metallisierte Abschnitte durch Bilden eines sehr engen nicht leitenden Spalts (32), welcher breit genug ist, eine offene Schaltung zwischen den Abschnitten zu bilden, jedoch nicht breit genug ist, um bereits merklich sichtbar zu sein.

4. Ein Verfahren nach Anspruch 3, **gekennzeichnet durch den Schritt** des Abtrennens des sehr engen Spalts (32) mit einer seriellen Schreibstrahlvorrichtung (16), dessen Strahlabmessung wenigstens so klein wie die Größe des kleinsten Merkmals des abzutrennenden Schaltungselements gewählt wird.

5. Ein Verfahren nach Anspruch 4, **dadurch gekennzeichnet, daß** die serielle Schreibstrahlvorrichtung (16) einen fokussierten Ionenstrahl ausgibt.

6. Ein Verfahren nach Anspruch 4, **dadurch gekennzeichnet, daß** die Schreibstrahlvorrichtung (16) einen Laserstrahl ausgibt.

7. Ein Verfahren nach einem der Ansprüche 3 bis 6, **gekennzeichnet durch** **die Schritte** des Bildens des sehr engen Spalts (32) in einer ersten Stufe einer Metallisierung und des Bedeckens des sehr engen Spalts (32) in einer zweiten Stufe einer Metallisierung.

## Revendications

1. Système pour protéger des circuits intégrés contre le copiage non autorisé, comprenant:
(a) au moins un circuit intégré (33) qui est destiné à effectuer une fonction de circuit souhaitée et qui comporte des éléments de circuit pour effectuer ladite fonction de circuit;
(b) au moins un élément (34) de circuit supplémentaire à l'intérieur dudit circuit intégré (33) qui
(b1) est connecté au reste dudit circuit intégré (33) mais qui ne contribue pas à ladite fonction de circuit et qui
(b2) a l'apparence visible d'être fonctionnellement interconnecté au reste dudit circuit intégré (33) mais qui comporte une modification physique qui n'apparaît pas facilement de façon visible à la personne qui copie, cette modification conduisant ledit élément (34) de circuit supplémentaire à fonctionner d'une manière différente;
caractérisé en ce que
(b3) ledit au moins un élément de circuit supplémentaire (34) comporte une connexion (30) de circuit métallisé apparente qui comporte des parties métallisées séparées espacées les unes des autres par un espace (32) non conducteur très étroit, qui est suffisamment large pour former un circuit ouvert entre lesdites parties mais pas suffisamment large pour être facilement perçu de façon visible.

2. Système selon la revendication 1, caractérisé en ce que ledit espace très étroit (32) est formé dans un premier niveau de métallisation et est recouvert par un second niveau de métallisation.

3. Procédé pour protéger des circuits intégrés contre le copiage non autorisé, dans lequel le circuit intégré respectif (33) est destiné à effectuer une fonction de circuit souhaitée et comporte des éléments de circuit pour effectuer ladite fonction de circuit, ledit procédé comprenant les étapes consistant à
réaliser au moins un élément (34) de circuit supplémentaire à l'intérieur dudit circuit intégré (33),
connecter ledit élément (34) de circuit supplémentaire avec le reste dudit circuit intégré (33) bien qu'il ne contribue pas à ladite fonction de circuit,
donner audit élément (34) de circuit supplémentaire l'apparence visible d'être interconnecté de manière fonctionnelle avec le reste dudit circuit intégré (33), et
réaliser dans ledit élément (34) de circuit supplémentaire une modification physique pas facilement apparente de façon visible à une personne qui copie, cette modification conduisant ledit élément (34) de circuit supplémentaire à fonctionner d'une manière différente;
caractérisé par les étapes consistant à
former ledit au moins un élément (34) de circuit supplémentaire avec une connexion (30) de circuit métallisé apparente et diviser ladite connexion (30) de circuit métallisé apparente en parties métallisées séparées en formant un espace (32) non conducteur très étroit qui est suffisamment large pour former un circuit ouvert entre lesdites parties mais pas suffisamment large pour être facilement perçu de manière visible.

4. Procédé selon la revendication 3, caractérisé par l'étape de découpe dudit espace (32) très étroit avec un appareil (16) à faisceau d'écriture en série, dont la dimension du faisceau est sélectionnée pour être au moins aussi petite que la dimension caractéristique la plus petite de l'élément de circuit à découper.

5. Procédé selon la revendication 4, caractérisé en ce que ledit appareil (16) à faisceau d'écriture en série émet un faisceau d'ions focalisé.

6. Procédé selon la revendication 4, caractérisé en ce que ledit appareil (16) à faisceau d'écriture en série émet un faisceau laser.

7. Procédé selon l'une des revendications 3 à 6, caractérisé par les étapes de formation dudit espace très étroit (32) dans un premier niveau de métallisation et de recouvrement dudit espace (32) très étroit par un second niveau de métallisation.
